# FASCICULE DE BREVET EUROPEEN

(11) **EP 2 200 057 B1**
(45) Date de publication et mention de la délivrance du brevet: **10.02.2016**
(21) Numéro de dépôt: 09179314.1
(22) Date de dépôt: 15.12.2009
(51) Int. Cl.: H01H 3/36, H01H 3/44, H01H 31/00, F16H 27/06, H01H 3/26

(54) **Dispositif mécanique de commande d'un sectionneur à haute ou moyenne tension**
Antriebssvorrichtung eines Mittel- oder Hoschspannungstrennschalters
Driving mechanism for a medium or high voltage disconnector

(30) Priorité: 22.12.2008 FR 0858927
(43) Date de publication de la demande: 23.06.2010
(73) Titulaire: ALSTOM Technology Ltd, 5400 Baden (CH)
(72) Inventeur: Von Allmen, Peter, 5033 Buchs (CH); Zeugin, Martin, 5028 Ueken (CH)
(74) Mandataire: Ilgart, Jean-Christophe

(56) Documents cités:
- EP-A- 1 659 601
- FR-A- 2 482 361
- US-A- 2 534 724
- US-A- 2 605 647
- US-A- 3 590 175

## Description

### DOMAINE TECHNIQUE

La présente invention se rapporte au domaine des dispositifs mécaniques de commande d'appareillages électriques, en particulier de sectionneurs pour circuits à haute ou moyenne tension, et plus généralement au domaine des dispositifs mécaniques de commande du type comprenant des moyens d'entraînement en rotation d'un arbre de transmission et des moyens de verrouillage de cet arbre dans une série discrète de positions angulaires prédéterminées.

Les sectionneurs haute ou moyenne tension sont des dispositifs permettant d'isoler une partie d'un réseau électrique sous tension, telle par exemple qu'une ligne à haute tension, un transformateur électrique, ou une partie d'un poste électrique, de sorte qu'un opérateur puisse y accéder sans danger.

Ces sectionneurs comprennent un contacteur déplaçable entre une position d'ouverture et une position de fermeture d'un circuit électrique. Certains sectionneurs comportent une troisième position dédiée à la mise à la terre, auquel cas leur contacteur est également déplaçable entre la position d'ouverture et la position de mise à la terre.

Les dispositifs de commande des sectionneurs doivent être particulièrement fiables pour limiter au mieux les risques de dysfonctionnement et d'endommagement de l'appareillage, et les risques d'accidents encourus par les agents intervenant sur les lignes et appareillages électriques à haute ou moyenne tension.

Les dispositifs de commande des sectionneurs à trois positions doivent en particulier être conçus pour interdire tout passage direct de la position de fermeture à la position de mise à la terre, et inversement, et doivent au contraire obliger le sectionneur à passer par la position d'ouverture lorsqu'il quitte sa position de fermeture ou de mise à la terre.

Pour atteindre un bon niveau de fiabilité, ces dispositifs incorporent des mécanismes complexes dans lesquels coopèrent de nombreuses pièces mécaniques, ce qui rend ces dispositifs relativement coûteux, lourds et encombrants.

### ÉTAT DE LA TECHNIQUE ANTÉRIEURE

Un dispositif de commande de ce type est par exemple décrit dans le document EP 1 659 601 A1. Ce dispositif comprend un arbre de transmission, qui comporte des moyens d'accouplement au contacteur mobile d'un appareillage électrique à trois positions de commutation, et qui porte un disque échancré. Le dispositif comprend également un arbre auxiliaire sur lequel est montée une roue dentée entraînée en rotation par un moteur électrique et portant deux galets diamétralement opposés.

En fonctionnement, l'arbre de transmission alterne entre des phases de rotation dans lesquelles l'un des galets est engagé dans une échancrure du disque échancré et entraîne ce dernier en rotation, et des phases d'immobilisation dans lesquelles aucun des galets n'est engagé dans une échancrure du disque échancré. La roue dentée et le disque échancré forment ainsi ensemble un mécanisme « à croix de Malte », parfois appelé « mécanisme de Genève ». Pendant les phases d'immobilisation de l'arbre de transmission, ce dernier se trouve dans l'une des trois positions de commutation et est bloqué en rotation par des moyens de verrouillage.

Par ailleurs, le dispositif décrit dans le document précité peut en outre comprendre des moyens de limitation du couple transmis par le moteur électrique à l'arbre de transmission.

Ces moyens de limitation de couple sont montés sur l'arbre de transmission et permettent de limiter les risques d'endommagement du dispositif de commande lors d'un incident, tel qu'un blocage du contacteur mobile de l'appareillage électrique auquel le dispositif est accouplé.

Ces moyens présentent toutefois l'inconvénient d'être lourds et encombrants, ce qui est rendu nécessaire du fait de leur agencement sur l'arbre de transmission et compte tenu du niveau élevé du couple transmis par cet arbre.

Or, de façon inhérente aux mécanismes à croix de Malte, le rapport de transmission du couple entre l'arbre auxiliaire et l'arbre de transmission varie entre une valeur nulle et une valeur maximale au cours d'une phase d'entraînement en rotation de l'arbre de transmission, ce qui limite les possibilités d'agencer des moyens de limitation du couple ailleurs que sur l'arbre de transmission.

Par ailleurs,le document US 2 605 647 A décrit un dispositif selon le préambule de la revendication 1.

### EXPOSÉ DE L'INVENTION

L'invention a notamment pour but d'apporter une solution simple, économique et efficace à ces problèmes, permettant d'éviter les inconvénients précités.

Elle a notamment pour objet un dispositif mécanique de commande d'un appareillage, en particulier électrique, qui soit peu encombrant et relativement léger.

Elle a également pour objet un dispositif mécanique de commande d'un appareillage, en particulier électrique, dans lequel le rapport de transmission entre un organe menant rotatif entraîné par un organe moteur, et un organe mené rotatif destiné à l'entraînement de moyens d'accouplement, est constant ou faiblement variable, de manière à permettre que des moyens de limitation du couple transmis à l'organe mené puissent être agencés entre l'organe moteur et l'organe menant, en particulier au voisinage de l'organe moteur, afin de réduire au mieux l'encombrement et la masse de ces moyens de limitation de couple.

L'invention propose à cet effet un dispositif de commande, comprenant des moyens d'accouplement destinés à être accouplés à un appareillage à commander, ces moyens d'accouplement étant déplaçables en rotation et verrouillables dans des positions angulaires prédéterminées correspondant à différents états de fonctionnement de l'appareillage à commander, ce dispositif comprenant un disque menant entraîné en rotation autour d'un axe par un organe moteur, un disque mené monté à rotation autour dudit axe et solidaire en rotation des moyens d'accouplement, et des moyens de commutation entre un mode d'entraînement en rotation des moyens d'accouplement, dans lequel le disque menant est relié mécaniquement au disque mené de sorte que le disque menant entraîne le disque mené en rotation, et un mode de verrouillage de la position angulaire des moyens d'accouplement, dans lequel les deux disques sont libres en rotation l'un par rapport à l'autre, les moyens de commutation comprenant un organe tournant monté à rotation autour d'un axe parallèle à l'axe des disques. Selon l'invention, ledit organe tournant porte au moins un moyen d'indexage qui, sous l'effet de la rotation de l'organe tournant, est susceptible d'être engagé simultanément dans deux échancrures respectivement formées dans les bords périphériques des deux disques de manière à induire une commutation dans le mode d'entraînement en rotation des moyens d'accouplement, et d'être désengagé d'au moins l'une desdites échancrures de manière à permettre une commutation dans le mode de verrouillage de la position angulaire des moyens d'accouplement.

Les moyens de commutation permettent de relier mécaniquement les deux disques coaxiaux lors d'un changement du mode de fonctionnement de l'appareillage commandé par le dispositif, pour que le disque menant entraîne en rotation le disque mené et donc aussi les moyens d'accouplement du dispositif, et ces moyens de commutation permettent de rendre les deux disques libres en rotation l'un par rapport à l'autre lorsque les moyens d'accouplement ont atteint une position correspondant au mode de fonctionnement souhaité dudit appareillage, de sorte que le disque mené et les moyens d'accouplement ne soient plus entraînés en rotation, et cela même si le disque menant poursuit sa rotation jusqu'à l'arrêt de l'organe moteur.

Sous l'effet de la rotation de l'organe tournant, le moyen d'indexage permet ainsi tour à tour de relier mécaniquement les deux disques coaxiaux de manière à entraîner les moyens d'accouplement d'une première position angulaire à une seconde position angulaire, puis de les rendre libres l'un par rapport à l'autre.

Cette configuration permet de limiter l'amplitude des variations du rapport de transmission entre le disque menant et le disque mené, dans le mode d'entraînement en rotation des moyens d'accouplement.

En particulier, le dispositif est de préférence configuré de sorte que, dans le mode d'entraînement en rotation des moyens d'accouplement, le rapport de transmission entre les deux disques est compris entre 0,5 et 1,5.

Comme cela apparaîtra plus clairement dans ce qui suit, une telle fourchette de valeurs est avantageuse en ce qu'elle permet d'accroître le couple appliqué au disque mené par une diminution du rapport de transmission, lorsque cela est nécessaire, tout en conservant un rapport de transmission suffisamment élevé pour éviter les problèmes rencontrés avec les mécanismes à croix de Malte des dispositifs de l'art antérieur.

Le dispositif selon l'invention peut en particulier être avantageusement configuré de sorte que, dans le mode d'entraînement en rotation des moyens d'accouplement, les deux disques soient rendus solidaires en rotation par les moyens de commutation précités.

Dans ce cas, le disque mené qui est solidaire en rotation des moyens d'accouplement tourne à l'unisson avec le disque menant qui est entraîné par l'organe moteur, de sorte que le rapport de transmission entre les deux disques est égal à 1. De cette manière, le rapport de transmission entre l'organe moteur et les moyens d'accouplement est constant.

Dans un mode de réalisation de l'invention, les échancrures des disques s'étendent radialement de sorte que les deux disques sont solidaires en rotation, dans le mode d'entraînement en rotation des moyens d'accouplement.

De cette manière, comme cela a été mentionné ci-dessus, le rapport de transmission entre l'organe moteur et les moyens d'accouplement est constant, dans le mode d'entraînement en rotation des moyens d'accouplement.

Dans un autre mode de réalisation de l'invention, au moins l'une des échancrures a un profil courbé de sorte que le rapport de transmission entre les deux disques est inférieur à 1 lors d'une commutation dans le mode d'entraînement en rotation des moyens d'accouplement pour entraîner ces moyens d'accouplement d'une première vers une seconde desdites positions angulaires prédéterminées.

De cette manière, le couple appliqué au disque mené est plus élevé au début de l'entraînement en rotation de ce disque, ce qui peut être avantageux, notamment lorsque l'appareillage à commander oppose un couple résistant relativement important au début du passage d'un certain mode de fonctionnement, correspondant à ladite première position angulaire, à un autre mode de fonctionnement, correspondant à ladite seconde position angulaire. Cela est par exemple le cas lors de la séparation du contact mobile et du contact fixe d'un sectionneur électrique à haute tension, pour passer d'un mode de fonctionnement fermé à un mode ouvert.

L'organe tournant comprend de préférence une pluralité de moyens d'indexage agencés autour de son axe, et chaque disque comporte alors de préférence plusieurs échancrures agencées sur une portion de la circonférence du disque.

Le nombre d'échancrures du disque menant est égal au nombre de positions prédéterminées des moyens d'accouplement diminué d'une unité, de sorte qu'à chaque trajet entre deux positions prédéterminées correspond une échancrure du disque menant.

Les échancrures du disque mené comprennent de préférence des échancrures intermédiaires de grande profondeur, dont le nombre est identique au nombre des échancrures du disque menant, et deux échancrures d'extrémité et de faible profondeur.

Comme cela apparaîtra plus clairement dans ce qui suit, les échancrures intermédiaires sont destinées à l'entraînement en rotation du disque mené par le disque menant mais aussi au verrouillage du disque mené dans les positions angulaires qui correspondent aux différentes positions angulaires prédéterminées des moyens d'accouplement, tandis que les échancrures d'extrémité ne participent qu'au verrouillage du disque mené.

Les échancrures sont de préférence régulièrement réparties sur ladite portion de la circonférence de chacun des disques.

En variante, si les positions angulaires prédéterminées des moyens d'accouplement ne sont pas définies à un intervalle angulaire régulier, les échancrures peuvent être réparties d'une manière irrégulière appropriée.

Avantageusement, deux moyens d'indexage consécutifs de l'organe tournant sont partiellement engagés respectivement dans deux échancrures voisines du disque mené pour bloquer ce dernier en rotation, lorsque les moyens d'accouplement sont dans l'une des positions angulaires prédéterminées.

Ces moyens d'indexage permettent ainsi de verrouiller le disque mené, et donc les moyens d'accouplement, dans leurs différentes positions angulaires prédéterminées, en provoquant un blocage mutuel du disque mené et de l'organe tournant.

Les deux disques et l'organe tournant sont de préférence agencés de sorte que lesdits deux moyens d'indexage consécutifs sont appliqués contre le bord du disque menant, lorsque les moyens d'accouplement sont dans l'une des positions angulaires prédéterminées.

Dans le mode de verrouillage des moyens d'accouplement, l'appui des deux moyens d'indexage consécutifs, qui sont engagés partiellement dans deux échancrures du disque mené, contre le bord du disque menant, permet d'immobiliser en rotation l'organe tournant, et donc aussi le disque mené et les moyens d'accouplement.

Avantageusement, les points de contact respectifs desdits deux moyens d'indexage consécutifs avec les flancs des échancrures voisines précitées du disque mené, sont situés dans les plans passant respectivement par l'axe de l'organe tournant et par des axes respectifs des deux moyens d'indexage consécutifs, lorsque les moyens d'accouplement sont dans l'une des positions angulaires prédéterminées, de sorte qu'un déplacement en rotation de l'organe tournant provoque simultanément l'engagement de l'un des moyens d'indexage dans l'une des échancrures et le désengagement de l'autre moyen d'indexage hors de l'autre échancrure.

Ainsi, à partir d'un état de verrouillage des moyens d'accouplement dans l'une de leurs positions angulaires prédéterminées, lorsqu'une échancrure du disque menant se trouve dans une position angulaire telle que son ouverture coïncide avec l'ouverture de ladite échancrure du disque mené dans laquelle s'engage ledit moyen d'indexage, il suffit d'un léger mouvement rotatif de l'organe tournant pour induire un entraînement en rotation des moyens d'accouplement vers une autre position angulaire.

Avantageusement, le bord périphérique du disque menant présente des dents, dont l'une exerce une pression orientée radialement vers l'extérieur sur l'un des deux moyens d'indexage consécutifs précités, lors d'une commande de modification du mode de fonctionnement de l'appareillage à commander, pour provoquer un déplacement en rotation de l'organe tournant.

Un tel déplacement en rotation induit le désengagement dudit moyen d'indexage hors d'une échancrure du disque mené conjointement avec l'engagement de l'autre des moyens d'indexage précités dans deux échancrures respectives des deux disques.

Les dents présentent de préférence des flancs incurvés contre lesquels les moyens d'indexage peuvent glisser ou rouler pour permettre un passage progressif du mode de verrouillage des moyens d'accouplement au mode d'entraînement en rotation de ces moyens d'accouplement.

D'une manière générale, les dents forment des moyens de contrôle de la position angulaire de l'organe tournant.

Le disque menant comporte avantageusement une portion de disque ayant un rayon supérieur au rayon R1 de ce disque menant, et dont le bord périphérique présente des extrémités raccordées à des portions du bord du disque menant de rayon R1 par des rebords radiaux susceptibles d'être appliqués contre l'un des moyens d'indexage consécutifs précités pour limiter la course en rotation du disque menant lorsque les moyens d'accouplement sont dans une position extrême parmi les positions angulaires prédéterminées.

Ces rebords radiaux forment ainsi des butées de fin de course du disque menant en cas d'arrêt tardif de l'organe moteur du dispositif.

L'organe tournant comprend de préférence deux plateaux triangulaires identiques et superposés, qui sont montés sur un arbre, appelé arbre auxiliaire dans ce qui suit, et dont les sommets respectifs sont reliés deux à deux par des rivets et portent des galets cylindriques à section circulaire qui sont montés à rotation sur ces rivets et qui forment les moyens d'indexage.

Les galets cylindriques à section circulaire présentent l'avantage de pouvoir rouler au contact du bord du disque menant d'une part, et au contact des flancs des échancrures des deux disques d'autre part.

La structure à deux plateaux superposés confère une bonne rigidité à l'organe tournant et assure la retenue des galets sur leurs rivets respectifs.

Le dispositif de commande comprend de préférence des moyens de limitation du couple transmis par l'organe moteur au disque menant, ces moyens étant agencés entre l'organe moteur et le disque menant, sur un axe distinct de l'axe des disques.

En effet, du fait de la limitation de l'amplitude des variations du rapport de transmission entre le disque menant et le disque mené, il est possible d'intégrer des moyens de limitation de couple en tout point de la chaîne de transmission de la puissance de l'organe moteur au disque menant. Il est donc en particulier possible d'agencer ces moyens sur un axe situé au voisinage de l'organe moteur, où le couple est relativement faible, de manière à pouvoir utiliser des moyens de limitation du couple qui soient relativement peu massifs, peu encombrants et peu coûteux à fabriquer.

Avantageusement, l'organe moteur comprend un moteur électrique, dont l'axe de rotation est parallèle à une platine de châssis du dispositif, et qui entraîne un engrenage concourant dont un axe est parallèle à l'axe du moteur et dont l'autre axe est perpendiculaire à la platine de châssis et parallèle à l'axe des disques.

Cette configuration permet de rendre le dispositif particulièrement compact.

En variante, l'axe de rotation du moteur peut être parallèle à l'axe des disques, lorsque cela présente un intérêt pratique.

En outre, le dispositif de commande comprend de préférence des moyens d'indication de la position angulaire des moyens d'accouplement à des moyens de contrôle et de commande de l'organe moteur.

Ces moyens d'indication permettent un arrêt automatique de l'organe moteur à la fin d'une manoeuvre de changement de la position angulaire des moyens d'accouplement, après que ces moyens d'accouplement ont atteint une position angulaire souhaitée.

Avantageusement, les moyens d'accouplement sont formés à une extrémité d'un arbre de transmission qui porte le disque mené et sur lequel le disque menant est monté fou.

Cette configuration permet une liaison mécanique simple et fiable entre le disque mené et les moyens d'accouplement.

Dans ce cas, le dispositif de commande comprend avantageusement une roue dentée d'entraînement solidaire du disque menant et montée folle sur l'arbre de transmission.

Cette roue dentée permet la transmission de la puissance de l'organe moteur au disque menant.

Les moyens d'accouplement sont avantageusement adaptés pour être accouplés à un sectionneur électrique à haute ou moyenne tension, par exemple à trois positions de commutation.

Le dispositif selon l'invention est en effet particulièrement approprié pour commander un appareillage électrique de ce type, du fait de la grande fiabilité et du faible encombrement du dispositif.

L'invention ne saurait toutefois se limiter à la commande d'un tel sectionneur, et le dispositif selon l'invention peut être avantageusement employé pour la commande de tout type d'appareil ayant un élément d'accouplement déplaçable en rotation dans une série discrète de positions angulaires.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique en perspective d'un dispositif de commande selon un premier mode de réalisation de l'invention ;
- la figure 2 est une vue schématique en perspective sensiblement de dessus d'une partie du dispositif de la figure 1 ;
- la figure 3 est une vue en perspective à plus grande échelle d'une partie de la figure 1, comportant un plan de coupe passant par les axes de rotation respectifs d'un arbre de transmission et d'un arbre auxiliaire du dispositif ;
- la figure 4 est une vue schématique en perspective d'un disque menant du dispositif de la figure 1 ;
- la figure 5 est une vue schématique en perspective d'un disque mené du dispositif de la figure 1 ;
- les figures 6 à 10 sont des vues schématiques partielles de dessus du dispositif de la figure 1, montrant les deux disques et l'organe tournant du dispositif au cours de différentes étapes du fonctionnement de ce dispositif ;
- la figure 11 est une vue semblable à la figure 10, représentant un dispositif selon un deuxième mode de réalisation de l'invention.

### EXPOSÉ DÉTAILLÉ DE MODES DE RÉALISATION PREFERES

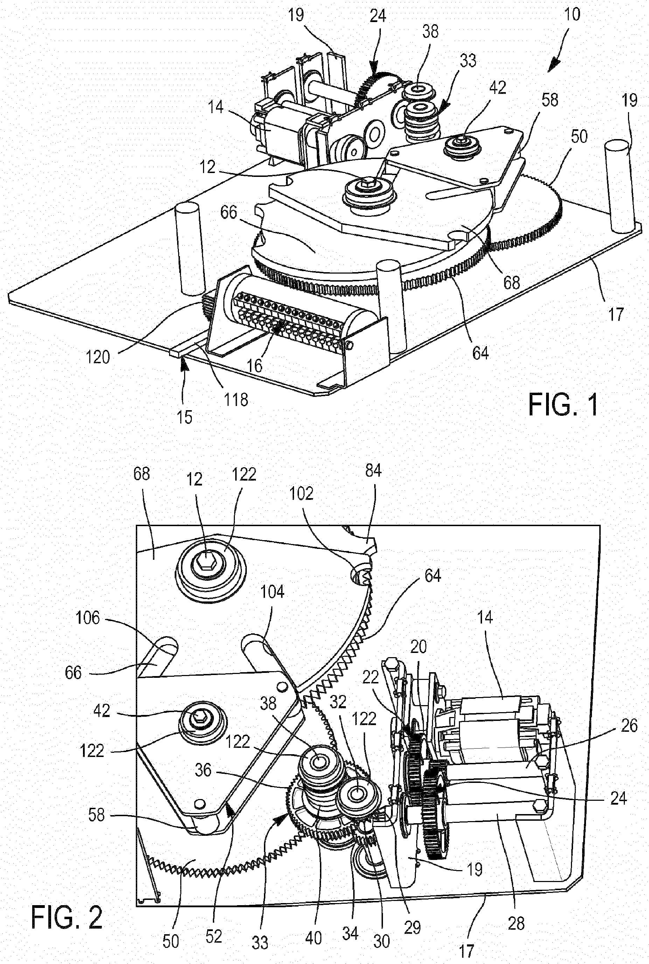

La figure 1 représente un dispositif mécanique 10 destiné à la commande d'un sectionneur (non représenté) à trois positions de commutation pour circuit à haute ou moyenne tension.

Le dispositif 10 comprend un arbre de transmission 12 destiné à être accouplé au contact mobile d'un sectionneur du type précité, un moteur électrique 14, des moyens de transmission de la puissance du moteur électrique 14 à l'arbre de transmission 12, des moyens 15 d'indication de la position angulaire de l'arbre de transmission 12 à des commutateurs auxiliaires 16, destinés notamment au contrôle du moteur électrique et à la signalisation de ladite position angulaire de l'arbre de transmission 12, et une platine de châssis 17 sur laquelle sont montés les principaux composants de ce dispositif.

Le dispositif 10 comprend en outre une plaque de châssis supérieure, qui n'est pas représentée sur les figures de manière à laisser apparaître les composants internes du dispositif. Cette plaque supérieure est fixée à des montants 19 reliés à la platine de châssis 17 et participe au support de certains composants du dispositif, comme cela apparaîtra plus clairement dans ce qui suit.

Comme le montre la figure 2, le moteur électrique 14 comporte un arbre de sortie rotatif 20. Ce moteur est fixé sur la platine de châssis 17 de telle sorte que son arbre rotatif 20 s'étende parallèlement à cette platine de châssis.

L'arbre rotatif 20 du moteur électrique 14 porte un pignon (masqué sur la figure 2) engrené avec un engrenage réducteur 22 lui-même engrené avec un autre engrenage réducteur 24, ces deux engrenages réducteurs étant portés respectivement par deux arbres rotatifs 26 et 28 qui s'étendent parallèlement à l'arbre rotatif 20 du moteur électrique 14.

L'engrenage réducteur 24 comprend un pignon conique 29 qui est porté par une extrémité de l'arbre 28 et qui est engrené avec un pignon conique 30. Ce pignon conique 30 est fixé sur l'extrémité supérieure d'un arbre 32 qui est monté à rotation sur la platine de châssis 17 et qui s'étend perpendiculairement à cette dernière et donc à l'arbre 28.

Les pignons coniques 29 et 30 forment un engrenage concourant qui permet la transmission du mouvement rotatif du moteur électrique 14, selon un axe parallèle à la platine de châssis 17, à des moyens de limitation de couple 33 ayant un axe de rotation perpendiculaire à cette platine 17.

Pour ce faire, l'arbre 32 porte un pignon 34 qui est engrené avec une roue dentée 36 montée à rotation sur un arbre 38 parallèle à l'arbre 32 et portant un pignon réducteur (masqué sur la figure 2). Dans l'exemple représenté sur la figure 2, le pignon réducteur de l'arbre 38 est disposé entre l'extrémité inférieure de cet arbre, qui est montée dans la platine de châssis 17, et la roue dentée 36 de l'arbre.

L'arbre 38 porte les moyens de limitation de couple 33 précités, qui sont destinés à limiter le couple transmis par la roue dentée 36 au pignon réducteur de cet arbre 38.

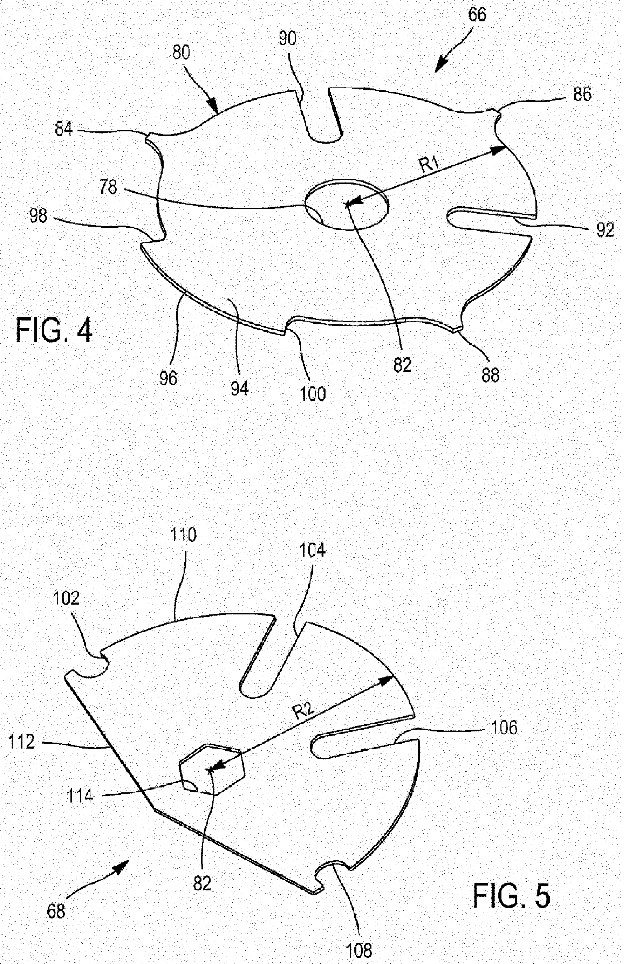

Ces moyens 33 peuvent être d'un type connu et comprennent par exemple des billes interposées entre deux flancs respectifs, en regard l'un de l'autre, de la roue dentée 36 et du pignon réducteur, des cuvettes formées dans les surfaces respectives de ces flancs pour loger partiellement les billes, et un ressort hélicoïdal 40 qui exerce une pression axiale sur la roue dentée 36 en direction du pignon réducteur de façon à maintenir les billes dans les cuvettes précitées, pour former un mécanisme débrayable de transmission qui est parfois appelé « limiteur de couple à billes » et dont un exemple est décrit en figure 5 du document EP 1 659 601 A1 précité de l'art antérieur.

Le dispositif 10 comprend en outre un arbre auxiliaire 42 qui est monté sur la platine de châssis 17 et qui s'étend selon un axe 43 perpendiculaire à cette dernière.

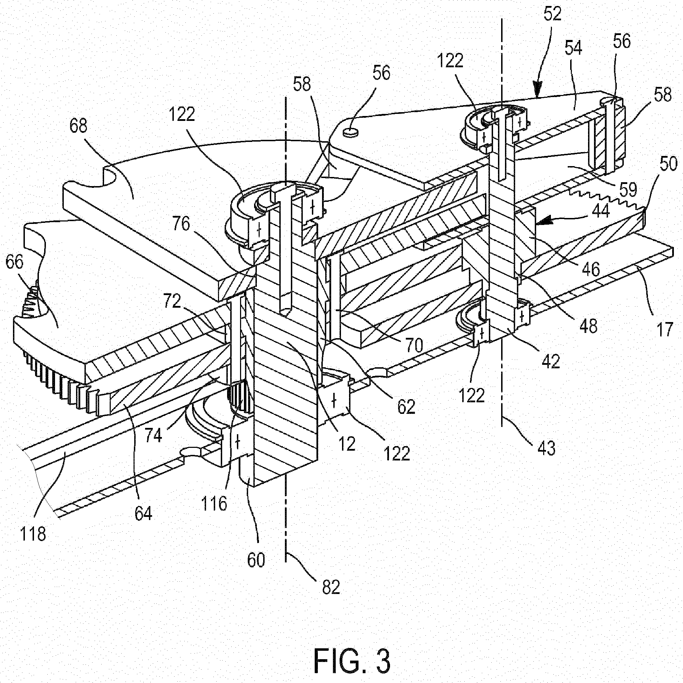

Comme cela apparaît plus clairement sur la figure 3, l'arbre auxiliaire 42 porte un manchon 44 qui est monté libre en rotation sur l'arbre 42 et qui comporte une partie supérieure dentée 46 et une partie inférieure 48 dont la surface externe a une section polygonale, par exemple hexagonale.

Une roue dentée 50 est montée autour de la partie inférieure 48 du manchon 44, et est engrenée avec le pignon réducteur de l'arbre 38. Cette roue dentée 50 comporte un orifice central de section conjuguée de celle de la partie inférieure 48 du manchon 44. Cet agencement permet de rendre solidaires en rotation la partie supérieure dentée 46 du manchon 44 et la roue dentée 50.

Le dispositif 10 comprend en outre un organe tournant 52 monté libre en rotation sur l'arbre auxiliaire 42, de telle sorte qu'il puisse se déplacer librement en rotation par rapport au manchon 44 porté par ce même arbre auxiliaire.

L'organe tournant 52 comprend un premier plateau 54 sensiblement en forme de triangle équilatéral, comportant un orifice central de montage sur l'arbre auxiliaire 42, et dont chaque sommet est traversé par une extrémité d'un rivet 56 s'étendant perpendiculairement au plan du plateau. Chaque rivet 56 porte un galet cylindrique 58 monté à rotation sur ledit rivet, et a son autre extrémité fixée à un sommet d'un deuxième plateau 59 identique au premier plateau 54 pour assurer la retenue axiale des galets rotatifs 58.

L'arbre de transmission 12 s'étend parallèlement à l'arbre auxiliaire 42 et a une extrémité inférieure qui est montée dans la platine de châssis 17 et qui comporte une partie en saillie 60, destinée à permettre l'accouplement de l'arbre de transmission 12 avec un sectionneur à commander (non visible sur les figures).

Un manchon 62 est monté fou sur l'arbre de transmission 12. Une roue dentée d'entraînement 64 et un disque menant 66 sont montés fixement autour du manchon 62, et un disque mené 68 est monté sur l'extrémité supérieure de l'arbre de transmission 12, de sorte que la roue dentée d'entraînement 64 et les deux disques 66 et 68 soient coaxiaux.

La fixation de la roue dentée d'entraînement 64 et du disque menant 66 au manchon 62 est par exemple assurée par des rivets 70 traversant chacun deux orifices alignés formés respectivement dans un épaulement annulaire 72 du manchon 62 et dans une bague 74 montée autour du manchon 62. Comme cela apparaît sur la figure 3, l'épaulement 72 est interposé entre le flanc inférieur du disque menant 66 et le flanc supérieur de la roue dentée d'entraînement 64, tandis que la bague 74 est maintenue en appui contre le flanc inférieur de cette roue dentée 64 par les rivets 70.

Le disque mené 68 comporte un orifice central à section polygonale, par exemple hexagonale, qui est traversé par une partie 76 de l'arbre de transmission 12 ayant une section de forme conjuguée de celle de l'orifice du disque mené 68, de sorte que ce disque mené 68 et l'arbre de transmission 12 sont solidaires en rotation.

Comme le montre la figure 4, le disque menant 66 comporte un orifice central 78 à section circulaire pour son montage autour du manchon 62.

Ce disque menant 66 comporte un bord externe 80 globalement circulaire, de rayon R1, et centré sur l'axe 82 du disque. Ce bord externe 80 comporte trois dents 84, 86 et 88 à flancs incurvés qui sont régulièrement réparties sur sa circonférence.

Le disque menant 66 comporte en outre deux échancrures radiales 90 et 92 à profil en U découpées dans le bord externe 80 du disque, ces échancrures étant formées respectivement à mi-distance des dents 84 et 86 et à mi-distance des dents 86 et 88. La largeur des échancrures 90 et 92 est légèrement supérieure au diamètre de la section des galets 58, pour permettre un engagement des galets 58 dans ces échancrures.

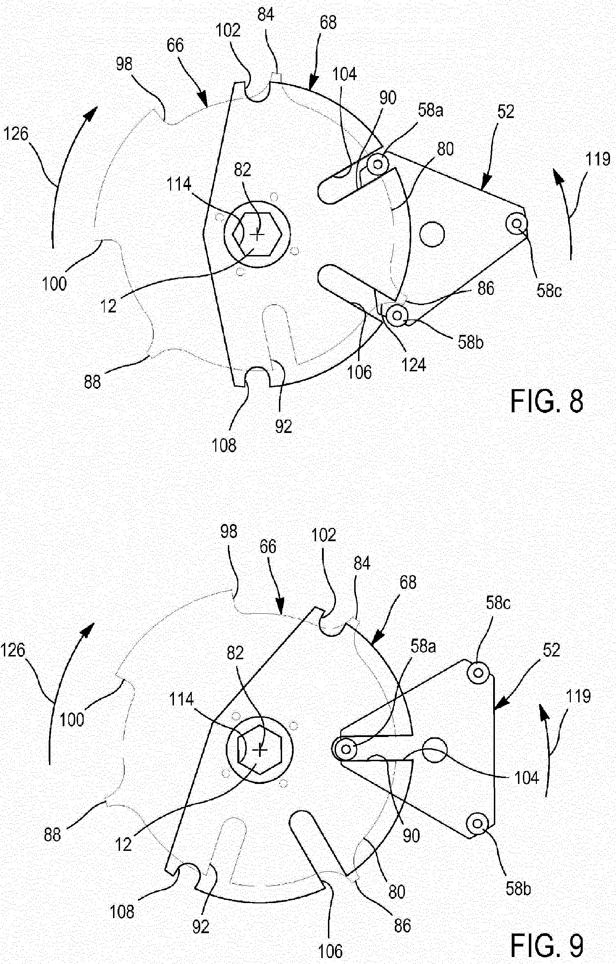

Les échancrures 90 et 92 sont positionnées par rapport à la dent 86 de telle sorte que, lorsque le disque menant 66 est dans une position angulaire dans laquelle l'une des échancrures 90 ou 92 se trouve en regard d'un premier galet 58 de l'organe tournant 52, le flanc de la dent 86 qui est situé du côté de la dent opposé à l'échancrure précitée se trouve en contact avec un deuxième galet 58 de l'organe tournant 52. Cette situation sera décrite plus en détail dans les explications qui suivent, en référence à la figure 8 sur laquelle les deux galets précités sont désignés respectivement par les références 58a et 58b.

Le fond des échancrures 90 et 92 est formé à une distance radiale du bord externe 80 du disque menant 66 qui est suffisante pour qu'un galet 58 de l'organe tournant 52 puisse parcourir le flanc de l'une ou l'autre des échancrure 90 et 92 pendant une rotation de l'organe tournant 52, sans être bloqué par le fond de ladite échancrure.

Le disque menant 66 comporte également une portion de disque 94 de rayon supérieur au rayon R1 et ayant un bord périphérique 96 dont les deux extrémités sont raccordées au bord externe 80 du disque 66 par des rebords radiaux respectifs 98 et 100, qui sont destinés à former des butées de fin de course pour ledit disque menant 66.

Comme le montre la figure 5, le disque mené 68 comporte quatre échancrures radiales 102, 104, 106 et 108 découpées à intervalle régulier dans une portion en arc de cercle 110 du bord externe de ce disque. Cette portion en arc de cercle 110 s'étend sur un peu plus de 180°.

Dans l'exemple représenté, une portion inutile du disque 68 a été retirée par découpage afin d'alléger le dispositif. C'est pourquoi le bord externe du disque mené 68 comporte une partie sensiblement rectiligne 112 qui relie les extrémités de la portion en arc de cercle 110.

Le rayon R2 de la portion en arc de cercle 110 du bord externe du disque mené 68 est sensiblement égal à la somme du rayon R1 du disque menant 66 et du rayon de la section des galets 58.

Les échancrures du disque mené 68 comprennent deux échancrures d'extrémité 102 et 108 de forme semi-circulaire et de rayon sensiblement égal au rayon de la section des galets cylindriques 58, et deux échancrures intermédiaires 104 et 106 à profil en U.

La distance angulaire entre les échancrures du disque mené 68 dépend de l'angle de rotation de l'arbre de transmission 12 entre deux positions prédéterminées consécutives. Dans l'exemple représenté, cet angle est de 60 degrés, de sorte que les échancrures d'extrémité 102 et 108 sont diamétralement opposées.

Le fond des échancrures 104 et 106 est formé à une distance radiale de la portion en arc de cercle 110 du bord externe du disque mené 68 qui est suffisante pour qu'un galet 58 de l'organe tournant 52 puisse parcourir le flanc de l'une ou l'autre des échancrure 104 et 106 pendant une rotation de l'organe tournant 52, sans être bloqué par le fond de ladite échancrure.

L'écartement entre l'arbre de transmission 12 et l'arbre auxiliaire 42, la distance entre les axes respectifs de l'organe tournant 52 et de ses galets 58, et l'angle au centre des plans radiaux médians des échancrures 104 et 106 du disque mené 68, sont tels que deux galets 58 consécutifs de l'organe tournant 52 peuvent venir simultanément en appui contre le bord externe 80 du disque menant 66, en pénétrant partiellement dans deux échancrures consécutives du disque mené 68, telles par exemple que les échancrures 104 et 106.

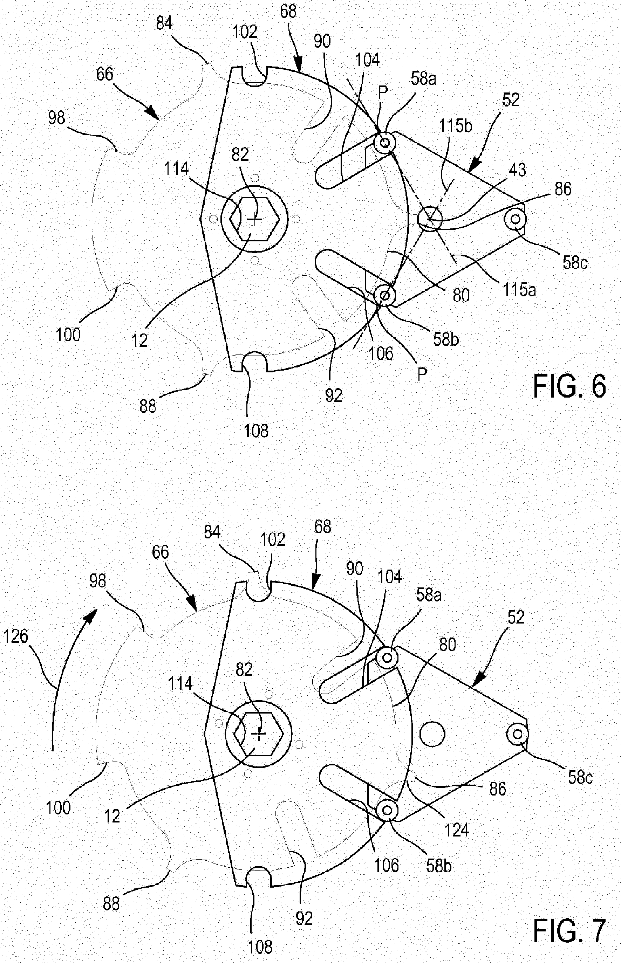

Dans cette position, le point de contact P entre le flanc de l'échancrure 104, respectivement 106, et le galet 58a, respectivement 58b, l'axe de ce galet 58a, respectivement 58b, et l'axe 43 de l'organe tournant 52, sont situés dans un même plan 115a, respectivement 115b, de la manière représentée sur la figure 6.

Comme cela apparaîtra plus clairement dans l'explication qui suit relative au fonctionnement du dispositif 10, cette caractéristique permet de faciliter l'engagement total de l'un des deux galets 58 précités dans l'échancrure correspondante du disque mené 68 simultanément au désengagement de l'autre des galets 58 précités hors de l'autre échancrure précitée de ce disque mené 68.

Par ailleurs, le manchon 62 de l'arbre de transmission 12 comporte une partie inférieure dentée 116 (figure 3) engrenée avec une crémaillère 118 également engrenée avec une roue dentée 120 (figure 1) reliée aux commutateurs 16 commandant l'alimentation du moteur électrique 14 et signalant la position de l'arbre de transmission 12 et par conséquence la position des contacts du sectionneur commandé par ce dispositif.

La partie inférieure dentée 116 du manchon 62 et la crémaillère 118 forment ainsi les moyens 15 d'indication de la position angulaire de l'arbre de transmission 12 aux commutateurs 16 de contrôle du moteur électrique.

Les différents arbres du dispositif 10 peuvent être montés dans leurs supports respectifs, tels que la platine 17, la plaque supérieure de châssis et les montants 19, par tous moyens appropriés, tels par exemple que des roulements à billes 122 (figure 3).

Les figures 6 à 10 illustrent le fonctionnement du dispositif de commande décrit ci-dessus, et représentent plus particulièrement les deux disques 66 et 68 et l'organe tournant 52, qui sont destinés à l'entraînement de l'arbre de transmission 12 de ce dispositif.

La figure 6 représente le dispositif 10 dans un état dans lequel le moteur électrique 14 est à l'arrêt et l'arbre de transmission 12 se trouve dans une position médiane, correspondant à un fonctionnement en mode ouvert du sectionneur qui est accouplé à cet arbre de transmission 12.

Dans cette position, deux galets 58a et 58b reposent sur le bord externe 80 du disque menant 66, de part et d'autre de la dent 86, ce qui empêche toute rotation de l'organe tournant 52, et ces galets 58a et 58b sont partiellement engagés respectivement dans les échancrures intermédiaires 104 et 106 du disque mené 68, de sorte que ce disque mené se trouve également bloqué en rotation.

La figure 7 montre le dispositif 10 peu après le début d'une manoeuvre de changement du mode de fonctionnement du sectionneur, destinée par exemple à amener celui-ci en mode fermé.

Lors de cette manoeuvre, le moteur électrique est d'abord mis en marche manuellement par un opérateur, ou par le système de commande, dans un premier sens de rotation, de manière à provoquer une rotation du disque menant 66 dans le sens des aiguilles d'une montre, cette rotation étant symbolisée par la flèche 126 sur la figure 7.

Le mouvement rotatif de l'arbre 20 du moteur électrique 14 est en effet transmis successivement aux engrenages réducteurs 22 et 24, à l'engrenage concourant 29, 30, au pignon 34, à la roue dentée 36, au limiteur de couple 33, à la roue 50, au pignon 46, puis à la roue d'entraînement 64 solidaire du disque menant 66.

Le disque mené 68 continu d'être bloqué en rotation par les galets 58a et 58b qui roulent contre le bord 80 du disque menant 66, alors en rotation, jusqu'à ce que le galet 58b arrive en appui contre un flanc incurvé 124 de la dent 86 du disque menant 66.

Comme illustré sur la figure 8, l'échancrure 90 du disque menant 66 se trouve alors superposée à l'échancrure 104 du disque mené 68, dans laquelle le galet 58a est déjà engagé, de sorte que le galet 58b peut suivre la courbe du flanc 124 de la dent 86 et provoquer ainsi une rotation de l'organe tournant 52 dans le sens inverse du sens de rotation du disque menant 66 (flèche 119), induisant simultanément un engagement du galet 58a dans l'échancrure 90 du disque menant 66 et un désengagement du galet 58b hors de l'échancrure 106 du disque mené 68.

Le galet 58a, qui est engagé simultanément dans les échancrures respectives 90 et 104 des disques menant 66 et mené 68, rend alors ces deux disques solidaires en rotation, de sorte que le disque mené 68 et l'arbre de transmission 12 tournent à l'unisson avec le disque menant 66 qui continue d'être entraîné par le moteur électrique 14, comme l'illustre la figure 9.

Les deux disques 66 et 68 tournent à la même vitesse de sorte que le rapport de transmission entre le moteur électrique 14 et l'arbre de transmission 12 est constant.

Au cours de la rotation conjointe des deux disques 66 et 68, le galet 58a entraîne l'organe tournant 52 en rotation et effectue un aller retour dans les échancrures 90 et 104 en roulant contre les flancs de ces échancrures.

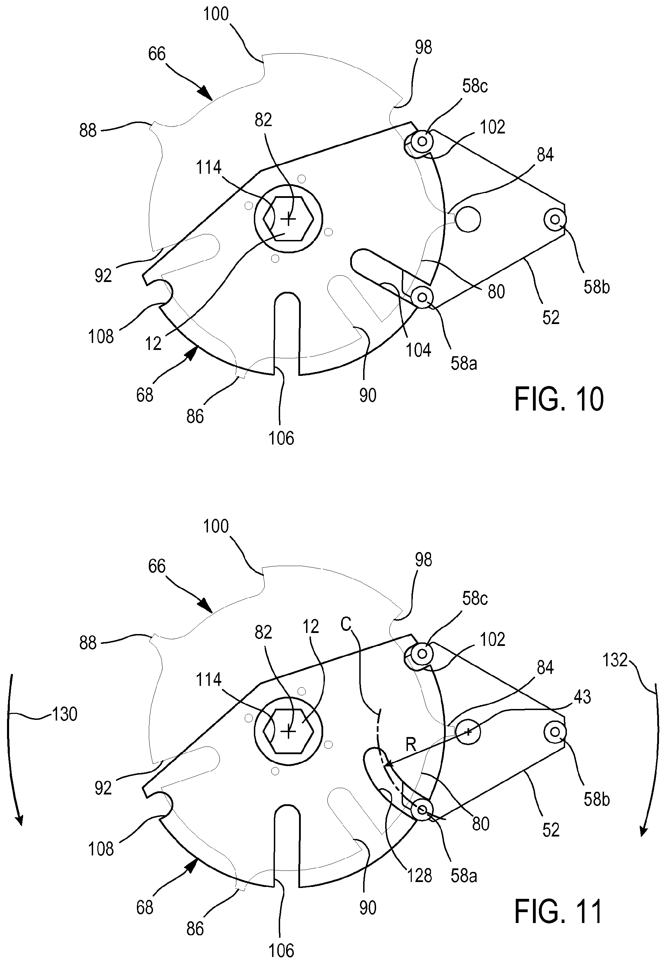

Lorsque le galet 58a se désengage de l'échancrure 90 du disque menant 66, l'organe tournant 52 cesse d'être entraîné en rotation par le disque menant 66, et le troisième galet 58c se trouve partiellement engagé dans l'échancrure d'extrémité 102 du disque mené 68, comme illustré sur la figure 10.

Le galet 58a reste quant à lui partiellement engagé dans l'échancrure 104 du disque mené 68, en reposant contre le bord 80 du disque menant 66, de sorte que l'organe tournant 52 et le disque mené 68 sont parfaitement bloqués en rotation.

L'arbre de transmission 12 se trouve alors dans une position prédéterminée correspondant au mode fermé du sectionneur auquel l'arbre est accouplé.

Le disque menant 66 peut continuer sa course en rotation jusqu'à ce que les commutateurs 16 commandent un arrêt du moteur électrique 14, suite au déplacement de la crémaillère 118 d'indication de la position angulaire de l'arbre de transmission 12.

D'une manière analogue, la commutation du sectionneur du mode fermé au mode ouvert s'effectue selon une cinématique inverse à ce qui est décrit ci-dessus.

Cette commutation requiert la mise en marche du moteur électrique 14 dans un second sens de rotation, inverse du premier sens de rotation du moteur 14, pour permettre l'entraînement du disque menant 66 dans le sens inverse de celui de la flèche 126 de la figure 7. La rotation du disque menant 66 amène alors un flanc de la dent 84 de ce disque menant en appui contre le galet 58c de l'organe tournant 52 de manière à désengager ce galet 58c de l'échancrure d'extrémité 102 du disque mené 68, et à engager simultanément le galet 58a dans les échancrures respectives 90 et 104 des disques menant 66 et mené 68.

Le galet 58a permet alors l'entraînement du disque mené 68 par le disque menant 66, avec un rapport de transmission constant, jusqu'à ce que ce galet 58a se désengage de l'échancrure 90 du disque menant 66.

A ce moment, le galet 58b de l'organe tournant 52 s'engage dans l'échancrure 106 de sorte que le disque mené 68 se trouve immobilisé, comme sur la figure 6, peu avant l'arrêt du moteur électrique 14.

La commutation du sectionneur entre ses modes ouvert et de mise à la terre s'effectue d'une manière analogue à ce qui est décrit ci-dessus. La solidarisation des disques mené 68 et menant 66 est dans ce cas assurée par le galet 58b de l'organe tournant 52, et l'immobilisation du disque mené 68 dans le mode de mise à la terre est assurée par l'engagement des galets 58b et 58c respectivement dans les échancrures 106 et 108 du disque mené 68.

Le sens de rotation du moteur 14 et du disque menant 66 est contraire à celui symbolisé par la flèche 126 de la figure 7, pour un passage du mode ouvert au mode de mise à la terre.

Pendant le fonctionnement du dispositif de commande 10, les moyens de limitation de couple 33 permettent la transmission de la puissance du moteur électrique 14 à la roue dentée de renvoi 50.

En revanche, si l'un des éléments rotatifs du dispositif, ou du sectionneur commandé par ce dispositif, se trouve bloqué accidentellement, ce blocage se répercute de proche en proche jusqu'au pignon porté par l'arbre 38, de sorte que la pression exercée par le ressort 40 n'est plus suffisante pour maintenir les billes engagées dans les cuvettes respectives de ce pignon et de la roue dentée 36. Dès lors, cette roue dentée 36 n'est plus solidaire en rotation du pignon de l'arbre 38 et peut tourner librement sans entraîner le pignon en rotation.

Les moyens de limitation de couple 33 permettent ainsi de limiter au mieux les efforts transmis aux différents organes rotatifs du dispositif en cas de blocage accidentel, et donc de réduire les risques d'endommagement de ce dispositif et du sectionneur accouplé à ce dispositif.

Ces moyens de limitation de couple 33 permettent en particulier de parer à une défaillance des moyens 15 d'indication de la position de l'arbre de transmission 12, ou des commutateurs 16 de contrôle du moteur électrique 14, ayant pour conséquence un entraînement du disque menant 66 au-delà de sa course normale, jusqu'à ce que l'un des rebords radiaux 98 ou 100 de ce disque vienne en butée contre la surface cylindrique de l'un des galets 58 de l'organe tournant 52, et induise un débrayage des moyens de limitation de couple 33.

En cas de blocage accidentel des contacts du sectionneur accouplé au dispositif de commande 10, l'agencement des moyens de limitation de couple 33 permet aux commutateurs auxiliaires 16 d'assurer une signalisation correcte de la position de ces contacts.

La figure 11 représente un dispositif selon un autre mode de réalisation de l'invention.

Sur cette figure 11, les éléments de ce dispositif qui sont identiques à des éléments du dispositif décrit ci-dessus sont désignés par les mêmes références que ces éléments.

Ce dispositif diffère du dispositif décrit ci-dessus du fait qu'une échancrure 128 à profil courbé remplace l'échancrure radiale 104 du disque mené 68.

La courbure de cette échancrure 128 est telle que le fond de cette échancrure 128 est rapproché de l'échancrure 102 du disque mené 68.

Le rayon de courbure médian du profil de l'échancrure 128 est supérieur au rayon R du cercle C centré sur l'axe 43 de l'organe tournant 52 et sur lequel sont agencés les galets 58.

Depuis la position représentée sur la figure 11, qui correspond au mode de fonctionnement fermé du sectionneur accouplé à l'arbre de transmission 12, lorsque le disque menant 66 est entraîné en rotation par le moteur 14 dans le sens symbolisé par la flèche 130 (figure 11), de manière à entraîner l'organe tournant 52 en rotation dans le sens symbolisé par la flèche 132, le galet 58a de l'organe tournant 52 s'engage conjointement dans l'échancrure radiale 90 du disque menant 66 et dans l'échancrure courbée 128 du disque mené 68, et se déplace vers le fond de ces échancrures le long de leurs flancs respectifs, d'une manière analogue à ce qui a été décrit ci-dessus.

Du fait de la courbure de l'échancrure 128, le disque mené 68 tourne d'abord à une vitesse inférieure à celle du disque menant 66, de sorte que le rapport de transmission entre les deux disques est alors inférieur à 1.

Lorsque le galet 58a a atteint une position médiane au cours de sa course en rotation, son sens de déplacement relativement aux échancrures s'inverse, de sorte que ce galet 58a entame un déplacement le long des flancs des échancrures 90 et 128, radialement en direction de l'extérieur de ces échancrures.

Du fait de la courbure de l'échancrure 128, le disque mené 68 tourne alors à une vitesse supérieure à celle du disque menant 66, de sorte que le rapport de transmission entre les deux disques est alors supérieur à 1.

Dans cette configuration, le rapport de transmission suit donc une courbe d'évolution au cours du déplacement en rotation du disque mené 68, qui l'amène à être d'abord inférieur à 1 puis supérieur à 1. La courbure de l'échancrure 128 permet ainsi d'accroître le couple appliqué au disque mené 68 par le galet 58a au début de l'entraînement en rotation de ce disque mené 68, lors d'une commutation du sectionneur du mode fermé au mode ouvert.

Cela présente un intérêt dans la mesure où le passage du mode fermé au mode ouvert nécessite de dissocier deux contacts du sectionneur, ce qui requiert en général une force relativement importante.

Comme mentionné ci-dessus, l'invention n'est pas limitée aux dispositifs décrits ci-dessus en référence aux dessins annexés.

Un dispositif de commande selon l'invention peut par exemple comporter plus de trois positions de fonctionnement, auquel cas le nombre d'échancrures des disques menant 66 et mené 68 est plus élevé que dans les exemples décrits ci-dessus.

Les échancrures des disques 66, 68 peuvent en outre être réparties d'une manière irrégulière autour de l'axe 82 des disques, auquel cas les galets 58 de l'organe tournant 52 doivent être agencés d'une manière correspondante autour de l'axe 43 de l'organe tournant. Cela peut être utile lorsque les positions angulaires correspondant aux différents modes de fonctionnement du sectionneur accouplé au dispositif ne sont pas séparées par des angles égaux.

Par ailleurs, l'organe tournant 52 peut être de différentes formes sans sortir du cadre de l'invention. Les plateaux 54 et 59 de cet organe tournant 52 peuvent par exemple avoir la forme d'un polygone régulier ayant un nombre de sommets supérieur à trois, de manière à augmenter le nombre de galets 58 par rapport à l'exemple décrit ci-dessus.

Pour réduire le coût de fabrication de l'organe tournant 52, ses plateaux 54 et 59 peuvent également avoir la forme de disques, et les galets 58 être agencés sur la circonférence de ces disques.

Ces galets 58 peuvent en outre avoir diverses formes, par exemple cylindriques à section non circulaire. Il est très préférable dans ce cas que ces galets présentent une surface de contact suffisamment glissante pour permettre leur déplacement dans les échancrures des disques 66 et 68 avec un minimum de frottements.

En outre, l'axe du moteur 14 pourrait être parallèle aux axes respectifs 43 et 82 de l'organe tournant 52 et de l'arbre de transmission 12.

De plus, les moyens d'accouplement 60 pourraient être agencés sur un axe distinct de l'axe des disques menant 66 et mené 68, et reliés mécaniquement au disque mené 68, par exemple par des engrenages, de manière à être solidaires en rotation du disque mené 68.

## Revendications

1. Dispositif de commande (10), comprenant des moyens d'accouplement (60) destinés à être accouplés à un appareillage à commander, ces moyens d'accouplement étant déplaçables en rotation et verrouillables dans des positions angulaires prédéterminées correspondant à différents états de fonctionnement de l'appareillage à commander, ce dispositif comprenant un disque menant (66) entraîné en rotation autour d'un axe (82) par un organe moteur (14), un disque mené (68) monté à rotation autour dudit axe (82) et solidaire en rotation des moyens d'accouplement (60), et des moyens (52) de commutation entre un mode d'entraînement en rotation des moyens d'accouplement (60), dans lequel le disque menant (66) est relié mécaniquement au disque mené (68) de sorte que le disque menant (66) entraîne le disque mené (68) en rotation, et un mode de verrouillage de la position angulaire des moyens d'accouplement (60), dans lequel les deux disques (66, 68) sont libres en rotation l'un par rapport à l'autre, lesdits moyens de commutation comprenant un organe tournant (52) monté à rotation autour d'un axe (43) parallèle à l'axe (82) des disques (66, 68), le dispositif étant **caractérisé en ce que** ledit organe tournant (52) porte au moins un moyen d'indexage (58) qui, sous l'effet de la rotation dudit organe tournant (52), est susceptible d'être engagé simultanément dans deux échancrures (90, 104, 128) respectivement formées dans les bords périphériques des deux disques (66, 68) de manière à induire une commutation dans le mode d'entraînement en rotation des moyens d'accouplement (60), et est susceptible d'être désengagé d'au moins l'une desdites échancrures de manière à permettre une commutation dans le mode de verrouillage de la position angulaire des moyens d'accouplement (60).

2. Dispositif de commande selon la revendication 1, **caractérisé en ce que** les échancrures (90, 104) des disques (66, 68) s'étendent radialement de sorte que les deux disques (66, 68) sont solidaires en rotation, dans le mode d'entraînement en rotation des moyens d'accouplement (60).

3. Dispositif de commande selon la revendication 1, **caractérisé en ce qu'**au moins l'une (128) des échancrures d'au moins l'un des disques menant (66) et mené (68) a un profil courbé de sorte que le rapport de transmission entre les deux disques (66, 68) est inférieur à 1 lors d'une commutation du mode de verrouillage de la position angulaire au mode d'entraînement en rotation des moyens d'accouplement (60), pour entraîner ces moyens d'accouplement (60) d'une première vers une seconde desdites positions angulaires prédéterminées.

4. Dispositif de commande selon l'une quelconque des revendications 1 à 3, **caractérisé en ce que** l'organe tournant (52) comporte une pluralité de moyens d'indexage (58) agencés autour de son axe (43).

5. Dispositif de commande selon la revendication 4, **caractérisé en ce que** chaque disque (66, 68) comporte plusieurs échancrures (90, 92, 102, 104, 106, 108, 128) agencées sur une portion de la circonférence du disque.

6. Dispositif de commande selon la revendication 5, **caractérisé en ce que** deux moyens d'indexage (58, 58a, 58b, 58c) consécutifs de l'organe tournant (52) sont partiellement engagés respectivement dans deux échancrures voisines (102, 104, 106, 108, 128) du disque mené (68) pour bloquer ce dernier en rotation, lorsque les moyens d'accouplement (60) sont dans l'une des positions angulaires prédéterminées.

7. Dispositif de commande selon la revendication 6, **caractérisé en ce que** les disques (66, 68) et l'organe tournant (52) sont agencés de sorte que lesdits deux moyens d'indexage (58) consécutifs sont appliqués contre un bord périphérique (80) du disque menant (66), lorsque les moyens d'accouplement (60) sont dans l'une des positions angulaires prédéterminées.

8. Dispositif de commande selon la revendication 6 ou 7, **caractérisé en ce que** les points de contact P respectifs desdits deux moyens d'indexage (58) consécutifs avec les flancs des échancrures voisines précitées (104, 106, 128) du disque mené (68), sont situés dans les plans (115a, 115b) passant respectivement par l'axe (43) de l'organe tournant (52) et par des axes respectifs des deux moyens d'indexage (58) consécutifs, lorsque les moyens d'accouplement (60) sont dans l'une des positions angulaires prédéterminées, de sorte qu'un déplacement en rotation de l'organe tournant (52) provoque simultanément l'engagement de l'un des moyens d'indexage (58) dans l'une des échancrures (104, 106, 128) et le désengagement de l'autre moyen d'indexage (58) hors de l'autre échancrure (102, 104, 106, 108, 128).

9. Dispositif de commande selon l'une quelconque des revendications 6 à 8, **caractérisé en ce que** le bord (80) du disque menant (66) présente des dents (84, 86, 88), dont l'une exerce une pression orientée radialement vers l'extérieur sur l'un des deux moyens d'indexage (58) consécutifs, lors d'une commande de modification du mode de fonctionnement de l'appareillage à commander, pour provoquer un déplacement en rotation de l'organe tournant (52).

10. Dispositif de commande selon l'une quelconque des revendications 6 à 9, **caractérisé en ce que** le disque menant (66) comporte une portion de disque (94) ayant un rayon supérieur au rayon R1 de ce disque menant (66) et dont le bord périphérique (96) est raccordé au bord (80) du disque menant (66) par des rebords radiaux (98, 100) susceptibles d'être appliqués contre l'un des moyens d'indexage (58) contigus pour limiter la course en rotation du disque menant (66) lorsque les moyens d'accouplement (60) sont dans l'une des positions angulaires prédéterminées.

11. Dispositif de commande selon l'une quelconque des revendications 1 à 10, **caractérisé en ce que** l'organe tournant (52) comprend deux plateaux triangulaires (54, 59) identiques et superposés, qui sont montés sur un arbre (42) et dont les sommets respectifs sont reliés deux à deux par des rivets (56) et portent des galets cylindriques (58) à section circulaire qui sont montés à rotation sur ces rivets (56) et qui forment les moyens d'indexage (58).

12. Dispositif de commande selon l'une quelconque des revendications 1 à 11, **caractérisé en ce qu'**il comprend des moyens (33) de limitation du couple transmis par l'organe moteur (14) au disque menant (66), ces moyens (33) étant agencés entre l'organe moteur (14) et le disque menant (66), sur un axe distinct de l'axe (82) des disques (66, 68).

13. Utilisation d'un dispositif de commande selon l'une quelconque des revendications 1 à 12 à la commande d'un appareillage électrique à haute ou moyenne tension.

## Patentansprüche

1. Steuervorrichtung (10), enthaltend Kopplungsmittel (60), die dazu bestimmt sind, mit einer zu steuernden Einrichtung gekoppelt zu werden, wobei diese Kopplungsmittel drehbar sind und in vorbestimmten Winkelstellungen verriegelt werden können, die verschiedenen Betriebszuständen der zu steuernden Einrichtung entsprechen, wobei diese Vorrichtung eine Antriebsscheibe (66) aufweist, die von einem Antriebsorgan (14) um eine Achse (82) drehend angetrieben wird, sowie eine Abtriebsscheibe (68), die um die Achse (82) drehbar gelagert und drehfest mit den Kopplungsmitteln (60) verbunden ist, und Umschaltmittel (52) zum Umschalten zwischen einem Drehantriebsmodus der Kopplungsmittel (60), bei dem die Antriebsscheibe (66) mechanisch mit der Abtriebsscheibe (68) verbunden ist, so dass die Antriebsscheibe (66) die Abtriebsscheibe (68) drehend antreibt, und einem Verriegelungsmodus zum Verriegeln der Winkelstellung der Kopplungsmittel (60), bei dem die beiden Scheiben (66, 68) frei drehbar zueinander sind, wobei die Umschaltmittel ein drehbares Organ (52) aufweisen, das um eine Achse (43) parallel zur Achse (82) der Scheiben (66, 68) drehbar gelagert ist, wobei die Vorrichtung **dadurch gekennzeichnet ist, dass** das drehbare Organ (52) zumindest ein Indexierungsmittel (58) aufweist, das unter der Wirkung der Drehung des drehbaren Organs (52) gleichzeitig in zwei Aussparungen (90, 104, 128) eingreifen kann, die in den Umfangsrändern der beiden jeweiligen Scheiben (66, 68) ausgebildet sind, so dass ein Umschalten in den Drehantriebsmodus der Kopplungsmittel (60) eingeleitet wird, und das von zumindest einer der Aussparungen freigegeben werden kann, so dass ein Umschalten in den Verriegelungsmodus zum Verriegeln der Winkelstellung der Kopplungsmittel (60) möglich ist.

2. Steuervorrichtung nach Anspruch 1, **dadurch gekennzeichnet, dass** die Aussparungen (90, 104) der Scheiben (66, 68) radial verlaufen, so dass die beiden Scheiben (66, 68) im Drehantriebsmodus der Kopplungsmittel (60) drehfest verbunden sind.

3. Steuervorrichtung nach Anspruch 1, **dadurch gekennzeichnet, dass** zumindest eine (128) der Aussparungen zumindest einer der Scheiben aus Antriebs-(66) und Abtriebsscheibe (68) ein gekrümmtes Profil hat, so dass bei einem Umschalten vom Verrieglungsmodus zum Verriegeln der Winkelstellung in den Drehantriebsmodus der Kopplungsmittel (60) das Übersetzungsverhältnis zwischen den beiden Scheiben (66, 68) geringer als 1 ist, um diese Kopplungsmittel (60) von einer ersten in eine zweite vorbestimmte Winkelstellung mitzunehmen.

4. Steuervorrichtung nach einem der Ansprüche 1 bis 3, **dadurch gekennzeichnet, dass** das drehbare Organ (52) eine Mehrzahl von Indexierungsmitteln (58) aufweist, die um seine Achse (43) herum angeordnet sind.

5. Steuervorrichtung nach Anspruch 4, **dadurch gekennzeichnet, dass** jede Scheibe (66, 68) mehrere Aussparungen (90, 92, 102, 104, 106, 108, 128) aufweist, die an einem Abschnitt des Umfangs der Scheibe angeordnet sind.

6. Steuervorrichtung nach Anspruch 5, **dadurch gekennzeichnet, dass** die beiden aufeinanderfolgenden Indexierungsmittel (58, 58a, 58b, 58c) des drehbaren Organs (52) in zwei jeweilige, benachbarte Aussparungen (102, 104, 106, 108, 128) der Abtriebsscheibe (68) teilweise eingreifen, um letztere drehfest zu sichern, wenn die Kopplungsmittel (60) in einer der vorbestimmten Winkelstellungen sind.

7. Steuervorrichtung nach Anspruch 6, **dadurch gekennzeichnet, dass** die Scheiben (66, 68) und das drehbare Organ (52) so angeordnet sind, dass die beiden aufeinanderfolgenden Indexierungsmittel (58) an einen Umfangsrand (80) der Antriebsscheibe (66) angedrückt werden, wenn die Kopplungsmittel in einer der vorbestimmten Winkelstelllungen sind.

8. Steuervorrichtung nach Anspruch 6 oder 7, **dadurch gekennzeichnet, dass** die jeweiligen Kontaktpunkte P der beiden aufeinanderfolgenden Indexierungsmittel (58) mit den Flanken der vorgenannten, benachbarten Aussparungen (104, 106, 128) der Abtriebsscheibe (68) in den Ebenen (115a, 115b) liegen, die durch die Achse (43) des drehbaren Organs (52) bzw. durch die jeweiligen Achsen der beiden aufeinanderfolgenden Indexierungsmittel (58) verlaufen, wenn die Kopplungsmittel in einer der vorbestimmten Winkelstelllungen sind, so dass eine Drehverlagerung des drehbaren Organs (52) zugleich das Eingreifen eines der Indexierungsmittel (58) in eine der Aussparungen (104, 106, 128) und das Freigeben des anderen Indexierungsmittels (58) aus der anderen Aussparung (102, 104, 106, 108, 128) heraus bewirkt.

9. Steuervorrichtung nach einem der Ansprüche 6 bis 8, **dadurch gekennzeichnet, dass** der Rand (80) der Antriebsscheibe (66) Zähne (84, 86, 88) aufweist, von denen einer eine radial nach außen gerichtete Druckkraft auf eines der beiden aufeinanderfolgenden Indexierungsmittel (58) ausübt, und zwar bei einem Änderungsbefehl zum Ändern des Betriebsmodus der zu steuernden Einrichtung, um eine drehende Verlagerung des drehbaren Organs (52) hervorzurufen.

10. Steuervorrichtung nach einem der Ansprüche 6 bis 9, **dadurch gekennzeichnet, dass** die Antriebsscheibe (66) einen Scheibenabschnitt (94) aufweist, der einen Radius hat, der größer als der Radius R1 dieser Antriebsscheibe (66) ist und dessen Umfangsrand (96) mit dem Rand (80) der Antriebsscheibe (66) über radiale Randleisten (98, 100) verbunden ist, die dazu geeignet sind, an eines der entsprechenden Indexierungsmittel (58) angedrückt zu werden, um die Drehbewegung der Antriebsscheibe (66) zu begrenzen, wenn die Kopplungsmittel (60) in einer der vorbestimmten Winkelstellungen sind.

11. Steuervorrichtung nach einem der Ansprüche 1 bis 10, **dadurch gekennzeichnet, dass** das drehbare Organ (52) zwei identische, dreieckförmige Platten (54, 59) aufweist, die übereinanderliegen und an einer Welle (42) gelagert sind und deren jeweilige Spitzen paarweise über Nieten (56) verbunden sind und zylindrische Rollen (58) mit kreisrundem Querschnitt tragen, die drehbar an diesen Nieten (56) gelagert sind und die Indexierungsmittel (58) bilden.

12. Steuervorrichtung nach einem der Ansprüche 1 bis 11, **dadurch gekennzeichnet, dass** sie Begrenzungsmittel (33) zum Begrenzen des von dem Antriebsorgan (14) auf die Antriebsscheibe (66) übertragenen Moments aufweist, wobei diese Mittel (33) zwischen dem Antriebsorgan (14) und der Antriebsscheibe (66) an einer Achse angeordnet sind, die sich von der Achse (82) der Scheiben (66, 68) unterscheidet.

13. Verwendung einer Steuervorrichtung nach einem der Ansprüche 1 bis 12 zum Steuern einer elektrischen Hoch- bzw. Mittelspannungseinrichtung.

## Claims

1. A control device (10), including coupling means (60) adapted to be coupled to an apparatus to be controlled, said coupling means (60) being rotatably movable and being lockable in predetermined angular positions corresponding to different operating states of said apparatus to be controlled, said device comprising a driving disk (66) driven in rotation about an axis (82) by a motor unit (14), a driven disk (68) mounted to rotate about said axis (82) and constrained to rotate with said coupling means (60), and means (52) for switching between a drive mode for driving said coupling means (60) in rotation, in which said driving disk (66) is mechanically connected to said driven disk (68) so that said driving disk (66) can drive said driven disk (68) in rotation, and a locking mode for locking the angular position of said coupling means (60), in which said two disks (66, 68) are freely rotatable relative to each other, said switching means comprising a rotary member (52) that is mounted to rotate about an axis (43) parallel to said axis (82) of said disks (66, 68), the device being **characterized in that** said rotary member (52) carries at least one indexing means (58) which, due to rotation of said rotary member (52), can be simultaneously engaged into two slots (90, 104, 128) respectively formed in the peripheral edges of said two disks (66, 68) so as to induce a commutation into said drive mode, and can be disengaged from at least one of said slots so as to induce a commutation into said locking mode.

2. A control device according to claim 1, **characterized in that** said slots (90, 104) in said two disks (66, 68) extend radially with the result that said two disks (66, 68) are constrained to rotate together in said drive mode.

3. A control device according to claim 1, **characterized in that** at least one (128) of said slots in said driving disk (66) and/or said driven disk (68) has a curved profile with the result that the transmission ratio between said two disks (66, 68) is less than 1 when switching from said locking mode to said drive mode in order to drive the coupling means (60) from a first of said predetermined angular positions to a second of said predetermined angular positions.

4. A control device according to any one of claims 1 to 3, **characterized in that** said rotary member (52) includes a plurality of indexing means (58) arranged around its axis (43).

5. A control device according to claim 4, **characterized in that** each of said disks (66, 68) includes a plurality of slots (90, 92, 102, 104, 106, 108, 128) in a portion of the circumference of the disk.

6. A control device according to claim 5, **characterized in that** two consecutive indexing means (58, 58a, 58b, 58c) of said rotary member (52) are partially engaged in respective adjacent slots (102, 104, 106, 108, 128) in said driven disk (68) to lock it against rotation when said coupling means (60) are in one of said predetermined angular positions.

7. A control device according to claim 6, **characterized in that** said disks (66, 68) and said rotary member (52) are such that said two consecutive indexing means (58) are pressed against the peripheral edge (80) of said driving disk (66) when said coupling means (60) are in one of said predetermined angular positions.

8. A control device according to claim 6 or claim 7, **characterized in that** the respective points (P) of contact of said two consecutive indexing means (58) with the flanks of said adjacent slots (104, 106, 128) of said driven disk (68) are in planes (115a, 115b) respectively passing through the axis (43) of said rotary member (52) and through respective axes of said two consecutive indexing means when the coupling means (60) are in one of said predetermined angular positions, with the result that rotation of said rotary member (52) simultaneously causes engagement of one of said two consecutive indexing means (58) into one of said slots (104, 106, 128) and disengagement of the other indexing means (58) from the other slot (102, 104, 106, 108, 128).

9. A control device according to any one of claims 6 to 8, **characterized in that** said peripheral edge (80) of said driving disk (66) has teeth (84, 86, 88) one of which exerts radially outward pressure on one of said two consecutive indexing means (58) to cause said rotary member (52) to rotate in the event of a command to modify the mode of operation of the apparatus to be controlled.

10. A control device according to any one of claims 6 to 9, **characterized in that** said driving disk (66) includes a disk portion (94) having a radius greater than the radius (R1) of this driving disk (66) and a peripheral edge (96) connected to said peripheral edge (80) of the driving disk (66) by radial rims (98, 100) that can be pressed against one of said contiguous indexing means (58) to limit the rotation of said driving disk (66) when said coupling means (60) are in one of said predetermined angular positions.

11. A control device according to any one of claims 1 to 10, **characterized in that** said rotary member (52) includes two identical superposed triangular plates (54, 59) that are mounted on a shaft (42) and the respective vertices of which are connected in pairs by rivets (56) and carry circular section cylindrical rollers (58) that are mounted on said rivets (56) to rotate thereon and that form said indexing means (58).

12. A control device according to any one of claims 1 to 11, **characterized in that** it includes means (33) for limiting the torque transmitted by said motor unit (14) to said driving disk (66), said means (33) being disposed between the motor unit (14) and the driving disk (66) on an axis separate from said axis (82) of the disks (66, 68).

13. Use of a control device according to any one of claims 1 to 12 for controlling high-voltage or medium-voltage electrical switchgear.
